Europäisches Patentamt

**European Patent Office**

**Office européen des brevets**

(11) Numéro de publication: **0 114 008**
**B1**

(12) **FASCICULE DE BREVET EUROPEEN**

(45) Date de publication du fascicule du brevet:
**30.04.86**

(21) Numéro de dépôt: **83402322.8**

(22) Date de dépôt: **02.12.83**

(51) Int. Cl.⁴: **H 04 M 9/08**

(54) Poste téléphonique à écoute amplifiée muni d'un dispositif anti-larsen.

(30) Priorité: **14.12.82 FR 8220964**

(43) Date de publication de la demande:
**25.07.84 Bulletin 84/30**

(45) Mention de la délivrance du brevet:
**30.04.86 Bulletin 86/18**

(84) Etats contractants désignés:
**AT CH DE FR GB IT LI NL SE**

(56) Documents cités:
**GB - A - 2 096 434**
**US - A - 3 075 045**

(73) Titulaire: **THOMSON-CSF, 173, Boulevard Haussmann,
F-75379 Paris Cedex 08 (FR)**

(72) Inventeur: **Kaire, Jean-Claude, THOMSON-CSF
SCPI 173, bld Haussmann, F-75379 Paris Cedex 08 (FR)**

(74) Mandataire: **Guérin, Michel et al, THOMSON-CSF
SCPI 19, avenue de Messine, F-75008 Paris (FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

On tend de plus en plus à prévoir, sur les postes téléphoniques d'abonnés, des haut-parleurs d'écoute amplifiée permettant que la voix d'un correspondant soit entendue clairement, sans utilisation d'écouteurs supplémentaires, par des personnes qui sont à quelques mètres du poste.

Ces postes comportent un combiné microphone-écouteur, utilisé de toutes façons par une seule personne qui peut ou non mettre en service le système d'écoute amplifiée ou un microphone fixe dans les téléphones "mains libres".

Le haut-parleur d'écoute amplifiée peut être situé sur le poste lui-même; il est alors fixe, alors que le combiné est relié au poste par un fil et est mobile. De plus, le haut-parleur d'écoute amplifiée est souvent tourné vers le haut, c'est à dire directement vers la personne qui tient le combiné.

Il en resulte qu'il peut parfois se produire un effet "larsen", c'est à dire un sifflement violent resultant de ce que le microphone du combiné reçoit directement un son du haut-parleur et le renvoie dans le circuit où il est à nouveau amplifié par le haut-parleur. Ce phenomène de résonnance est bien connu et est très désagréable à l'oreille. Il peut se produire sur un poste telephonique à ecoute amplifiée dans la mesure où le microphone du combine est approché trop près du haut-parleur.

On a donc cherché à remédier à ce défaut pour obtenir un meilleur confort d'écoute. Le système généralement adopté consiste à prévoir dans le système d'écoute amplifiée une boucle "antilarsen" qui reçoit le signal issu du microphone du combiné et qui agit de manière à réduire l'amplitude du signal appliqué au haut-parleur d'écoute amplifiée si le niveau moyen de signal reçu par le microphone est trop élevé, car un niveau trop élevé peut indiquer qu'un effet "larsen" est en cours d'etablissement.

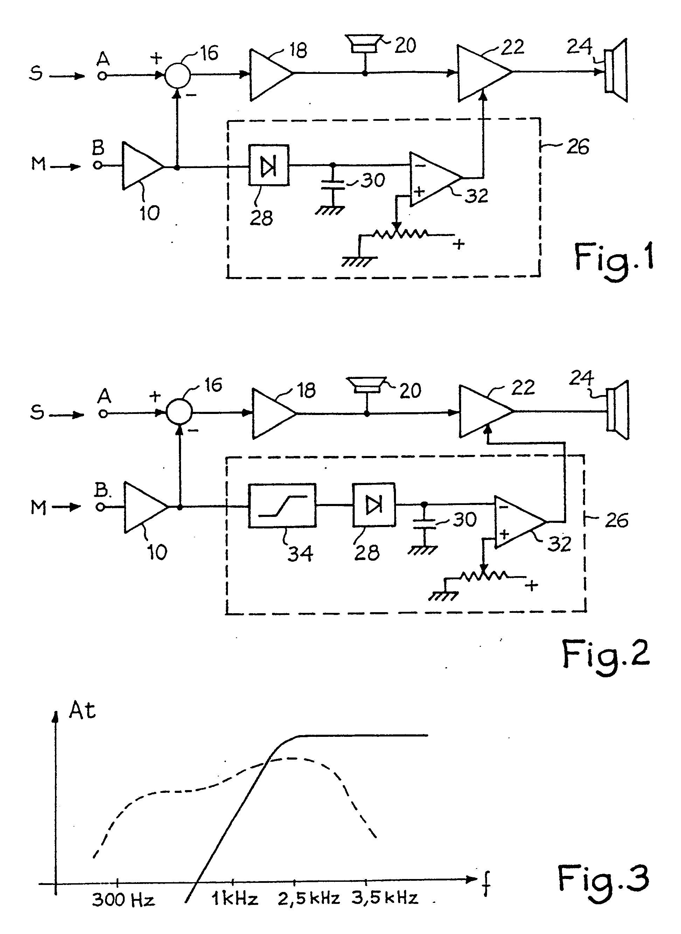

Un tel système est représenté à la figure 1. Un signal telephonique S (signal émission et réception mélangés) est présent à une entrée A raccordée à une ligne téléphonique, et un signal M arrive sur une entrée B raccordée à un microphone du combiné (non représenté). Le signal M est soustrait, après amplification dans un préamplificateur 10, du signal S présent sur la ligne, dans un soustracteur 16 appelé aussi "système antilocal" parce qu'il empêche le passage vers les écouteurs du signal émis localement, à savoir la voix de la personne qui tient le combiné téléphonique. Le signal de sortie du soustracteur 16 ne comprend plus que le signal de réception, c'est à dire la voix du correspondant à l'autre bout de la ligne.

La sortie du soustracteur est appliquée à un premier amplificateur 18, en sortie duquel est connecté l'écouteur 20 du combiné. Le signal ainsi amplifié est appliqué à un deuxième amplificateur 22, à gain variable, qui fournit un signal à un haut-parleur d'écoute amplifiée 24.

Une boucle antilarsen, representée dans un cadre pointillé 26, commande le gain de l'amplificateur 22 en fonction du signal M reçu du microphone. La boucle comprend un redresseur 28, une capacité de lissage 30, intégrant le signal redressé avec une constante de temps suffisante pour fournir une indication du niveau moyen du signal M, et un amplificateur ou un comparateur à seuil 32 qui commande le gain de l'amplificateur 22 pour le faire chuter si le signal issu du microphone 10 dépasse un seuil donné, et d'autant plus que ce seuil est dépassé.

Ce système a été essayé et commercialisé mais il ne donne pas satisfaction car, malgré sa simplicité, son réglage s'avère finalement être très délicat. En effet, il est apparu que la boucle antilarsen n'est suffisamment efficace que si le comparateur 32 fait franchement chuter le gain lorsque le niveau de sortie du microphone est tel qu'un phénomène de larsen risque de se produire. Mais le niveau sonore de l'effet larsen n'est pas forcément très bien connu et on est amené en pratique à régler le comparateur à un niveau très bas. Mais alors, il se trouve que l'écoute amplifiée est coupée dès que le microphone enregistre un bruit, et notamment lorsque l'utilisateur qui tient le combiné parle faiblement ou même respire un peu fort devant son microphone.

Un compromis est donc difficile à trouver s'il faut d'une part éliminer l'effet larsen même lorsque le microphone est très près du haut-parleur, et d'autre part éviter une coupure intempestive ou une diminution de l'écoute amplifiée en l'absence d'effet larsen.

Les solutions pour aboutir à un compromis valable consistent a priori en deux voies possibles:
- la première est de disposer le haut parleur d'écoute amplifiée de telle sorte qu'il soit difficile à l'utilisateur de rapprocher le microphone du combiné suffisamment près pour déclencher un effet larsen; mais la place disponible sur un poste téléphonique n'est pas grande et le combiné est relié au poste par un fil de sorte qu'il est toujours possible à l'utilisateur de le déplacer n'importe où. De plus, si on tourne le haut-parleur vers une face arrière, a priori peu accessible du poste, l'écoute amplifiée sera moins bonne pour les auditeurs;
- la deuxième solution consisterait à perfectionner le soustracteur 16. En effet, s'il etait parfait, ce soustracteur devrait empêcher tout effet larsen puisque le signal issu du micro n'est en principe pas transmis au haut-parleur d'écoute. En fait, ce système ne peut être parfait et le perfectionner aboutirait a un coût élevé qu'on ne souhaite pas. D'autre part, il est très dèsagréable de ne pas s'entendre du tout parler dans l'écouteur: on a l'impression que le téléphone ne fonctionne pas.

Pour améliorer très efficacement le fonctionnement d'une boucle antilarsen sans remanier la conception du poste téléphonique, sans rejeter le haut-parleur d'écoute amplifiée à une place incommode, et sans chercher de solutions complexes et chères à l'amélioration du système antilocal, la présente demande propose une solution particulièrement simple qui repose sur une analyse fine des problèmes évoqués précédemment.

Cette analyse a montré que l'effet larsen se produit toujours à une fréquence relativement élevée dans la bande passante du microphone, ceci principalement à cause de la courbe de réponse en fréquence de celui-ci qui présente son maximum au voisinage de 2 à 3 kilohertz.

Au contraire, les bruits qui coupent inutilement l'écoute amplifiée (bruit de parole de l'utilisateur, bruits de l'entourage, respiration bruyante, etc.) ont le maximum d'énergie dans une bande de fréquences inférieures à 1 kHz.

On prévoit selon l'invention une solution tenant compte de ces circonstances, qui consiste à insérer dans la boucle antilarsen, en amont du redresseur, un filtre passe-haut ou passebande présentant une forte atténuation pour les fréquences en dessous d'environ 1 kilohertz et une faible atténuation pour une gamme de fréquences dans laquelle l'effet larsen a le plus de chances de se produire. La différence entre la forte atténuation (à 1 kilohertz environ et en dessous) et la faible atténuation, est de préférence d'au moins 6 décibels.

Dans une première réalisation, le filtre présente une faible atténuation pour des fréquences comprises entre 2 et 3 kilohertz environ.

Dans une autre réalisation, on décale artificiellement à une fréquence élevée, hors de la bande passante audible (300 - 3400 Hz), la fréquence à laquelle s'établira l'effet larsen, et on prevoit que le filtre a une forte atténuation dans toute la bande passante audible et une faible atténuation dans la gamme de fréquences, en dehors de cette bande passante, pour laquelle l'effet larsen est susceptible de se produire. Pour imposer la fréquence de l'effet larsen, on insère en amont du haut-parleur d'écoute amplifiée un amplificateur à courbe de réponse en fréquence très sélective, plate dans la bande-passante du microphone et présentant un pic élevé à une fréquence élevée en dehors de cette bande passante (par exemple à 7 kilohertz).

D'autres caractéristiques et avantages de l'invention apparaîtront à la lecture de la description détaillée qui suit et qui est faite en référence aux dessins annexés dans lesquels:

- la figure 1 déjà décrite représente schématiquement un poste téléphonique à ecoute amplifiée de type connu;

- la figure 2 représente le poste perfectionné selon l'invention;

- la figure 3 représente un exemple de bande passante de filtre insére dans la boucle antilarsen, avec en pointillés une courbe de réponse en fréquence typique de microphone;

- les figures 4 et 5 représentent -des exemples simples de filtres passe-bande et passe-haut pouvant être insérés dans la boucle antilarsen;

- la figure 6 représente un autre mode de realisation de l'invention, incorporant un amplificateur sélectif;

- la figure 7 représente la courbe de réponse de l'amplificateur sélectif de la figure 6;

- la figure 8 représente une courbe de réponse combinant la réponse du microphone du combiné et de l'amplificateur sélectif de la figure 6.

Par rapport à la figure 1, le circuit selon l'invention est modifié par l'insertion, entre l'amplificateur 10 recevant le signal issu du microphone et le redresseur 28, d'un filtre passehaut ou passe-bande 34.

On comprendra que le choix d'un filtre passe-bande plutôt qu'un filtre passe-haut est dicté par des considérations secondaires telles que l'élimination des bruits, des parasites, etc., mais que la caractéristique essentielle du filtre est son aptitude à atténuer fortement les fréquences au dessous d'environ 1000 hertz et a laisser passer avec une atténuation beaucoup plus faible les fréquences dans la gamme de fréquences où l'effet larsen a le plus de chances de se produire. On ne se préoccupe donc pas ici de savoir si le filtre doit couper les très hautes fréquences (par exemple au delà de 10 kilohertz).

Dans l'exemple de la figure 2, l'effet larsen se produit à une fréquence se situant entre 2 et 3 kilohertz car c'est dans cette gamme que le microphone a une plus forte réponse.

Sur la figure 3, on a représenté en traits pointillés une courbe de réponse en fréquence typique de l'ensemble en cascade d'un microphone de combiné téléphonique, de l'amplificateur 10, du système antilocal 16, des amplificateurs 18 et 22 et du haut-parleur 24. La forme de cette courbe est imposée essentiellement par le microphone. On a représenté en traits pleins un exemple de courbe de réponse envisageable pour le filtre 34. L'échelle des amplitudes en ordonnée (atténuation At) importe peu et n'a pas été indiquée volontairement.

L'atténuation aux environs de 1000 hertz est d'environ 6 décibels au moins par rapport à l'atténuation au maximum de la courbe de réponse du filtre 34.

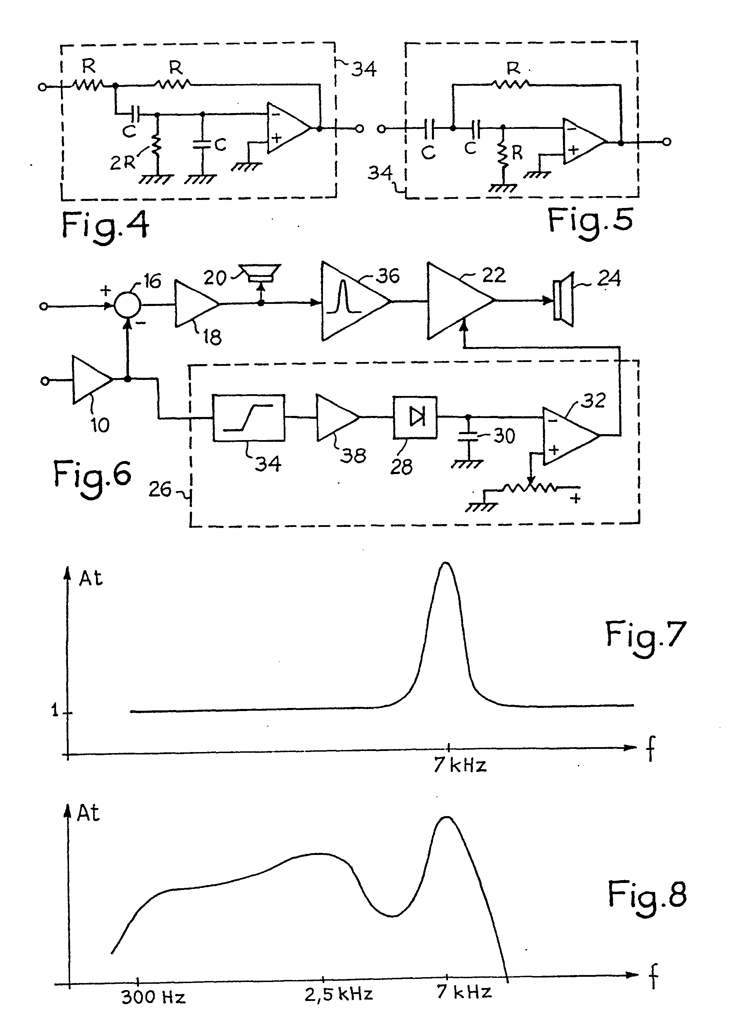

Le filtre utilisé peut être très simple, par exemple une cellule de Sallen et Key bien connue, passe-bande ou passehaut, dont deux exemples sont représentés respectivement aux figures 4 et 5. Ces filtres sont des filtres du deuxième ordre présentant une atténuation de 12 dB par octave en dessous de leur fréquence de coupure basse.

Si un début d'effet larsen se produit, ce sera pour une fréquence située vers le sommet de la courbe en traits pointillés de la figure 3. Le comparateur 32 détectera le dépassement d'un seuil de niveau sonore enregistré par le microphone et diminuera le gain de l'amplificateur 22 en amont du haut-parleur d'écoute amplifiée 24, ceci d'autant plus que le signal reçu par le microphone sera plus important.

Mais si un niveau de bruit, même important, est enregistré par le microphone dans une gamme de fréquences au dessous de 1000 hertz environ (bruit de paroles, bruit ambiant, respiration forte), ce bruit atténué par le filtre 34 ne sera pas suffisant pour faire basculer le comparateur 32. Il ne sera donc pas, a juste titre, considéré comme un début d'effet larsen justifiant la coupure du haut-parleur d'ecoute amplifiée.

Un autre mode de réalisation de l'invention est représenté à la figure 6. Cette réalisation diffère de celle qui a été décrite ci-dessus sur trois points:

Tout d'abord, on a inséré en amont de l'amplificateur 22 un amplificateur auxiliaire sélectif 36 qui a une courbe de réponse en fréquence très particulière en ce sens qu'elle est sensiblement plate dans la bande de fréquences audibles utile (par exemple de 300 hertz à 3,4 kilohertz pour un appareil téléphonique), et qu'elle présente un pic élevé dans une bande de fréquences plus élevée, en dehors de la bande passante du microphone. Par exemple, ce pic se situe entre 5 et 10 kilohertz. La courbe de réponse correspondante est representée à la figure 7.

La chaîne comprenant le microphone, l'amplificateur 10, le système antilocal 16, l'amplificateur 18, l'amplificateur 36, l'amplificateur 22 et le haut-parleur 24, possède alors une courbe de réponse en fréquence qui est celle de la figure 8. L'amplitude du pic est choisie telle que la courbe de la figure 8 présente elle-même un maximum absolu pour une fréquence correspondant à ce pic (entre 5 et 10 kilohertz): c'est alors à cette fréquence qu'un effet larsen a toutes les chances de se produire.

Par conséquent, la deuxième modification apportée au circuit de la figure 3 est le fait que la boucle antilarsen comporte un filtre passe-haut (ou passe-bande) dont la fréquence de coupure basse n'est pas de l'ordre de 1 kilohertz mais plutôt de l'ordre de 3 à 5 kilohertz.

La troisiéme modification est l'insertion d'un amplificateur à grand gain 38 en amont ou en aval du filtre passe-haut 34, permettant qu'une fréquence résultant de l'effet larsen (par exemple à 7 kilohertz) soit suffisamment amplifiée pour compenser la très faible réponse du microphone à cette fréquence et pour déclencher l'affaiblissement de l'écoute amplifiée.

De cette manière, aucun bruit en provenance du microphone, pas même un bruit à 3 kilohertz environ, ne déclenchera un affaiblissement de l'écoute amplifiée, car ce bruit sera neutralisé par le filtre passe-haut. Mais un bruit à plus de 5 kilohertz sera détecté par le comparateur 32 et entrainera un affaiblissement de l'écoute amplifiée. Il faut noter de plus que le rejet de l'effet larsen à une fréquence de 10 kilohertz est intéressant car il est beaucoup moins gênant du point de vue physiologique qu'un effet larsen à 3 kilohertz.

On peut enfin indiquer que l'amplificateur sélectif 36 et l'amplificateur 18 peuvent être réunis en un seul amplificateur ou en pratique en deux amplificateurs en parallèle dont l'un est très sélectif et n'amplifie que les fréquences autour de 10 kilohertz et l'autre a une courbe de réponse en fréquence plate jusqu'à 10 à 15 kilohertz au moins.

## Revendications

1. Appareil téléphonique à écoute amplifiée comprenant un microphone, un soustracteur de signaux (16) recevant un signal (M) issu du microphone et un signal (S) issu d'une ligne téléphonique, un amplificateur (22) et un haut-parleur d'écoute amplifiée (24) recevant le signal issu du soustracteur, et une boucle "antilarsen" (26) recevant le signal issu du microphone et agissant sur l'amplificateur d'écuote amplifiée pour réduire l'amplitude du signal appliqué au haut-parleur d'écoute amplifiée si le signal issu du microphone dépasse un certain niveau, caractérisé en ce que la boucle antilarsen inclut un filtre passehaut ou passe-bande (34) présentant une forte atténuation pour les fréquences en dessous d'environ 1 kilohertz et une faible atténuation pour des fréquences auxquelles un effet larsen a le plus de chances de se produire.

2. Appareil téléphonique selon la revendication 1, caractérisé en ce que la boucle antilarsen comprend le filtre passe-haut ou passe-bande (34) suivi d'un redresseur (28), d'une capacité de lissage (30), et d'un comparateur à seuil (32).

3. Appareil téléphonique selon la revendication 1, caractérisé en ce que le filtre passe-haut ou passe-bande présente une faible atténuation pour des fréquences d'environ 2 à 3 kilohertz.

4. Appareil téléphonique selon la revendication 1, caractérisé en ce qu'il est prévu, entre le soustracteur et le haut-parleur d'écoute amplifiée, un amplificateur sélectif (36) ayant une courbe de réponse en fréquence présentant, dans la bande passante du microphone, une réponse sensiblement plate et, à une fréquence plus élevée un pic d'amplitude suffisamment élevée pour que l'effet larsen se produise préférentiellement à une fréquence correspondant a ce pic.

5. Appareil téléphonique selon la revendication 4, caractérisé en ce que le filtre passe-haut ou passe-bande présente une forte atténuation dans toute la bande passante du microphone.

## Patentansprüche

1. Telefonapparat mit Hörerverstärkung mit einem Mikrophon, einem Signalsubtrahierer (16), der ein Signal (M) empfängt, das vom Mikrophon ausgesendet wird, sowie ein von einer Telefonleitung ausgesendetes Signal (S), ferner mit einem Verstärker (22) und mit einem Lautsprecher (24) für verstärkte Signale, der das vom Signalsubtrahierer ausgesendet Signal empfängt,und mit einer Antilarsenschleife (26), die das vom Mikrophon ausgesendete Signal empfängt und die auf den Lautsprecherverstärker einwirkt, um die Amplitude des am Lautsprecher anliegenden Signals zu verringern, wenn das vom Mikrophon ausgesendete Signal ein bestimmtes Niveau übersteigt,

dadurch gekennzeichnet, daß die Antilarsenschleife ein Hochpaßfilter oder ein Frequenzbandpaßfilter (34) aufweist, das Frequenzen unter etwa 1 kHz stark abschwächt und diejenigen Frequenzen wenig abschwächt, bei denen ein Larseneffekt mit größter Wahrscheinlichkeit erzeugt wird.

2. Telefonapparat nach Anspruch 1,

dadurch gekennzeichnet,

daß die Antilarsenschleife das Hochpaß oder Bandpaß filter (34) enthält, gefolgt von einem Gleichrichter (28), einem Glättkondensator (30) und einem Schwellwertvergleicher (32).

3. Telefonapparat nach Anspruch 1,

dadurch gekennzeichnet,

daß das Hochpaß- oder Bandpaßfilter Frequenzen zwischen etwa 2 bis 3 kHZ wenig abschwächt.

4.Telefonapparat nach Anspruch 1,

dadurch gekennzeichnet,

daß zwischen dem Subtrahierer und dem Lautsprecher ein selektiv arbeitender Verstärker (36) angeordnet ist, der einen Frequenzgang hat, der in dem vom Mikrophon ankommenden Frequenzband im wesentlichen flach ist und der bei einer höheren Frequenz eine Amplitudenspitze aufweist, die ausreichend hoch ist, so daß der Larseneffekt vorzugsweise bei einer dieser Spitze entsprechenden Frequenz erzeugt wird.

5. Telefonapparat nach Anspruch 4, dadurch gekennzeichnet,

daß das Filter die Frequenzen im gesamten vom Mikrophon ankommenden Frequenzband stark abschwächt.

## Claims

1. Amplified speaker telephone apparatus comprising a microphone, a signal subtractor (16) receiving a signal (M) from the microphone and a signal (S) from a telephone line, an amplifier (22) and a loudspeaker for amplified listening (24) receiving the signal from the subtractor, and an ""antilarsen" loop (26) receiving the signal from the microphone and acting on the listening amplifier for reducing the amplitude of the signal applied to the loudspeaker when the signal from the microphone exceeds a certain level, characterized in that the antilarsen loop includes a high-pass or band-pass filter (34) having a high attenuation for the frequencies below about 1 kilohertz and a low attenuation for frequencies where the larsen effect most likely occurs.

2. Telephone apparatus according to claim 1, characterized in that the antilarsen loop comprises the high-pass or band-pass filter (34) followed by a rectifier (28), a smoothing capacity (30) and a threshold comparator (32).

3. Telephone apparatus according to claim 1, characterized in that the high-pass or band-pass filter has a low attenuation for frequencies of about 2 to 3 kilohertz.

4. Telephone apparatus according to claim 1, characterized in that a selective amplifier (36) is provided between the subtractor and the amplified listening loudspeaker, such amplifier having a frequency response which is substantially flat within the pass-band of the microphone and has an amplitude peak at a higher frequency, this amplitude peak being sufficiently high so that the larsen effect is preferentially produced at a frequency corresponding to this peak.

5. Telephone apparatus according to claim 4, characterized in that the high-pass or band-pass filter has a high attenuation within the total pass-band of the microphone.

0 114 008

Fig.1

Fig.2

Fig.3

1

Fig.4

Fig.5

Fig.6

Fig.7

Fig.8